# EUROPÄISCHE PATENTSCHRIFT

(11) **EP 1 963 375 B1**
(45) Veröffentlichungstag und Bekanntmachung des Hinweises auf die Patenterteilung: **08.07.2009**
(21) Anmeldenummer: 06841362.4
(22) Anmeldetag: 14.12.2006
(51) Int. Cl.: C08F 6/00, C08J 11/02

(54) **RÜCKGEWINNUNG VON ETHYLEN UND VINYLACETAT AUS DEM RESTGASSTROM DER VINYLESTER-ETHYLEN-MISCHPOLYMERISATHERSTELLUNG**
RECOVERING ETHYLENE AND VINYL ACETATE FROM THE RESIDUAL GAS STREAM OF VINYL ESTER-ETHYLENE COPOLYMER PREPARATION
RECUPERATION D' ETHYLENE ET D' ACETATE DE VINYLE DANS LE RESIDU GAZEUX ISSU DE LA FABRICATION DU MELANGE DE POLYMERES D'ESTER DE VINYLE-ETHYLENE

(30) Priorität: 22.12.2005 DE 102005061576
(43) Veröffentlichungstag der Anmeldung: 03.09.2008
(73) Patentinhaber: Wacker Chemie AG, 81737 München (DE)
(72) Erfinder: GÜNALTAY, Mehmet, 84547 Emmerting (DE); SELIG, Manfred, 84489 Burghausen (DE)
(74) Vertreter: Fritz, Helmut
(86) Internationale Anmeldenummer: PCT/EP2006/069717
(87) Internationale Veröffentlichungsnummer: WO 2007/074075

(56) Entgegenhaltungen:
- EP-A1- 1 420 034

## Beschreibung

Die Erfindung betrifft ein Verfahren zur Rückgewinnung von nicht umgesetzten Monomeren, die im Restgasstrom der Vinylester-Ethylen-Mischpolymerisatherstellung anfallen.

Polymerisate auf Basis von Vinylester und Ethylen werden häufig als wässrige Dispersionen oder in Wasser redispergierbaren Polymerpulver in vielerlei Anwendungen, beispielsweise als Beschichtungsmittel oder Klebemittel für die unterschiedlichsten Substrate eingesetzt.

Bei der großtechnischen Polymerisation sind hohe Umsatzgrade Stand der Technik. So werden die Polymerisate üblicherweise bis zu einem Restmonomergehalt von weniger als 0,1 Gew.-%, bevorzugt sogar weniger als 0,05 Gew.-%, und im Falle von Vinylchlorid von weniger als 0,01 Gew.-% auspolymerisiert. Diese hohen Umsätze beziehen sich aber lediglich auf die unter Polymerisationsbedingungen flüssigen Monomere. Ethylen als unter Polymerisationsbedingungen gasförmiges Monomer folgt diesen Gesetzmäßigkeiten nicht. Zum einen polymerisiert es langsamer als beispielsweise Vinylacetat, zum anderen hält es sich zu einem großen Bruchteil in der Gasphase auf und kann unter den üblichen Bedingungen der Emulsionspolymerisation nicht erfasst werden.

Die großtechnische Polymerisation soll unter wirtschaftlichen Gesichtspunkten in möglichst kurzen Zeiträumen beendet sein, was aber zwangsläufig dazu führt, dass das eingesetzte Ethylen nicht vollständig verbraucht werden kann. Üblicherweise wird die Polymerisation bei einem Ethylen-Restgasgehalt von weniger als 5 Gew.-%, bevorzugt weniger als 2 Gew.-%, abgebrochen und der Reaktionsansatz entspannt. Der Entspannungsvorgang beinhaltet die Überführung des Reaktionsgemisches aus Polymerdispersion und Restgas von einem Druckreaktor in einem drucklosen Reaktor, dem so genannten Entspannungskessel unter Abtrennung des restlichen Ethylens. Das dabei anfallende Restgas enthält hauptsächlich Ethylen, Vinylacetat, Stickstoff und Wasserdampf.

Eine gängige Methode aus dem Stand der Technik ist die energetische Verwertung des anfallenden Restgases durch Verbrennung. Im Hinblick auf steigende Rohstoffkosten zeigt die stoffliche Rückgewinnung der Einzelkomponenten und Monomeren in wirtschaftlicher Hinsicht wesentliche Vorteile.

Aus dem Stand der Technik sind verschiedene Verfahren zur Restethylenrückgewinnung bekannt. Die Patentschrift WO 01/00559 A1 beschreibt ein Verfahren zur Wiedergewinnung von Ethylen aus dem bei der Vinylacetatherstellung anfallendem ethylenhaltigen Inertgasstrom. Dazu wird das ethylenhaltige Inertgas in Vinylacetat aufgenommen, das Ethylen in einem Vakuumkessel durch Entspannung freigesetzt, und anschließend zur Wiederverwendung rekomprimiert. Weiter wird ein Verfahren beschrieben, bei dem der ethylenhaltige Inertgasstrom in Essigsäure aufgenommen wird, in einer Strippkolonne mit ethylenhaltigem Restgas in Kontakt gebracht wird, das Ethylen am Kolonnenkopf zurückgewonnen wird, und in der Vinylacetat-Synthese wiederverwertet wird.

Die Restmonomerentfernung bei der Gasphasenpolymerisation, der Copolymere Ethylen mit höheren Olefinen, ist Gegenstand der Patentschrift EP 0 127 253 A1. Dazu wird das feste Copolymer bei reduziertem Druck von den höheren Olefinen befreit, und anschließend mit Inertgas-freiem Reaktorgas behandelt, welches schließlich in die Polymerisation zurückgeführt wird.

In der Patentschrift EP 1 420 034 A1 offenbart ein Herstellungsverfahren zur Mischpolymersiationvon Vinylester und Ethylen mittels radikalischer Polymerisation wobei das Ethylenhaltige Restgas nach Verdichtung wieder in Vinylester aufgenommen und das so erhaltene Gemisch erneut der Polymersiation zugeführt wird.

Alle die bisher bekannten Methoden aus dem Stand der Technik haben den Nachteil, dass sie das anfallende Restgas nicht optimal verwerten.

Aufgabe der vorliegenden Erfindung war es daher, ein Verfahren bereitzustellen, das es ermöglicht, aus dem anfallenden Restgas die Wertstoffe zu trennen, um sie einer wirtschaftlichen Verwertung zuführen zu können.

Diese Aufgabe wurde durch das erfindungsgemäße Verfahren gelöst, welches das Restgas durch eine fraktionierte Kondensation aufarbeitet und so die enthaltenen Rohstoffe einer weiteren stofflichen Verwertung zugänglich macht.

Gegenstand der Erfindung ist ein Verfahren zur Herstellung von Vinylester und Ethylen oder ethylenisch ungesättigten Monomeren enthaltenden Mischpolymerisaten durch wässrige, radikalische Polymerisation, bei einem Druck von 5 bis 100 bar absolut, nach dem Emulsions- oder Suspensionspolymerisationsverfahren, **dadurch gekennzeichnet, dass** nach Abschluss der Polymerisation das Reaktionsgemisch auf einen Druck von 0,1 bis 5 bar absolut entspannt wird, und die Rückgewinnung der nicht umgesetzten Monomeren durch mehrstufige fraktionierte Tiefkaltkondensation aus dem Restgas erfolgt.

Für die Polymerisation werden bevorzugt Gemische eingesetzt aus vinylacetat und Ethylen, sowie Gemische aus Vinylacetat und weiteren Vinylestern wie Vinyllaurat oder Vinylestern von α-verzweigten Monocarbonsäuren mit 9 bis 13 C-Atomen und Ethylen.

Das Polymerisationsverfahren kann sowohl vollkontinuierlich als auch diskontinuierlich betrieben werden.

Die Polymerisation wird bevorzugt bei einem Umsatz von mindestens 95 bis 99 Gew.-% der unter Polymerisationsbedingungen flüssigen Monomere, abgeschlossen.

Bei einer bevorzugten Ausführungsform des Verfahrens ist die mehrstufige Kondensationsanlage auf der Saugseite der Vakuumpumpe angeordnet, mit der der Unterdruck im Entspannungskessel hervorgerufen wird. Der Vorteil dieser Anordnung liegt darin, dass keine durch Polymerisation und Nebenproduktbildung in der Vakuumpumpe entstehenden Komponenten die Zusammensetzung des Restgases verändern können. Dadurch wird die Wiederverwertung der ursprünglichen Stoffe wie Ethylen und Vinylacetat insbesondere bei der Polymerisation nicht gefährdet.

Bei einer weiteren bevorzugten Ausführungsform des Verfahrens ist die mehrstufige Kondensationsanlage auf der Druckseite eines Verdichters angeordnet. Mit Hilfe von verdichtetem Ethylen, aus dem Gasstrahlverdichter, kann das Restgas aus dem Entspannungskessel abgesaugt werden. Dadurch werden die oben genannten Nachteile einer Vakuumpumpe, beispielsweise der Flüssigkeitsringpumpe, vermieden.

Als Kältemedium wird bevorzugt flüssiger Stickstoff oder verflüssigte Luft mit einer Einsatztemperatur von -180 bis -170°C bei entsprechenden Siededrücken von 5 bis 10 bar-absolut eingesetzt. Der Stickstoff verlässt die Anlage gasförmig bei Raumtemperatur und kann in der Dispersionsanläge zu Inertisierungszwecken verwendet oder in ein vorhandenes Werksnetz eingebunden werden.

Bei dem erfindungsgemäßen Verfahren handelt es sich um eine fraktionierende Kondensation des Restgases, bei der die unterschiedlichen Siede- und Gefrierpunkte der Hauptkomponenten beispielsweise Ethylen, Vinylacetat, Wasser und Stickstoff die Grundlage der Stofftrennung darstellen. Die Tabelle 1 zeigt die Siede- und Gefrierpunkte einiger wichtiger Hauptkomponenten, die im Restgas enthalten sein können.

**Tabelle 1**

| Komponente | Siedepunkt [°C] | Gefrierpunkt [°C] |
|---|---|---|
| Wasser | 100 | 0 |
| Vinylacetat | 73 | -93 |
| Ethylen | -103 | -169 |
| Ethylacetat | 77 | -84 |
| Methanol | 65 | -97 |
| Methylacetat | 57 | -98 |
| Acetaldehyd | 20 | -123 |

Die Kondensation der Einzelkomponenten aus dem Restgasstrom erfolgt im Produktionsmaßstab des erfindungsgemäßen Verfahrens durch eine Kaskadenschaltung von mindestens zwei, bevorzugt drei, Kondensationsstufen. Dabei werden die Temperaturen so eingestellt, dass die Unterschreitung der Gefrierpunkte der in der jeweiligen Stufe auszukondensierenden Komponente, vermieden wird.

Das erfindungsgemäße Verfahren ist **dadurch gekennzeichnet, dass** der Wasserdampf in der ersten Kondensationsstufe bei Temperaturen von mindestens 1°C, bevorzugt 1 bis 5°C, auskondensiert wird.

Weiterhin ist das erfindungsgemäße Verfahren **dadurch gekennzeichnet, dass** in der zweiten Kondensationsstufe Vinylacetat bei Temperaturen von -90 bis -60°C auskondensiert wird. Das so erhaltene flüssige Vinylacetat wird wieder in die Polymerisation zurückgeführt oder in einer Vinylacetatmonomer-Produktionsanlage in das Destillationssystem eingespeist.

Zudem ist das erfindungsgemäße Verfahren **dadurch gekennzeichnet, dass** in der dritten Kondensationsstufe Ethylen bei Temperaturen von -140 bis -100°C auskondensiert wird. Das so erhaltene flüssige Ethylen wird anschließend wieder in die Polymerisation eingespeist.

Eine weitere Ausführungsform des Verfahrens ist **dadurch gekennzeichnet, dass** das in flüssiger Form erhaltene Ethylen unter einem Druck von 1 bis 20 bar absolut verdampft und anschließend wieder in die Polymerisationsreaktion verdichtet oder in einer Vinylacetatmonomer-Produktionsanlage als Rohstoff in den Reaktionskreislauf eingespeist wird.

Das aufzuarbeitende Restgas setzt sich in Abhängigkeit vom Druck und der Temperatur der jeweiligen Polymerisation wie folgt zusammen: 1 bis 15 Vol% Wasser, 5 bis 20 Vol% Vinylacetat und 60 bis 90 Vol% Ethylen. Als weitere Komponenten sind Stickstoff und in Spuren Acetaldehyd, Methanol, Methyl- und Ethylacetat enthalten. Der Betriebsdruck, der bei der Entspannung der Dispersion herrscht, liegt bei 100 bis 5000 mbar absolut. Die Temperatur liegt zwischen 25 und 75°C.

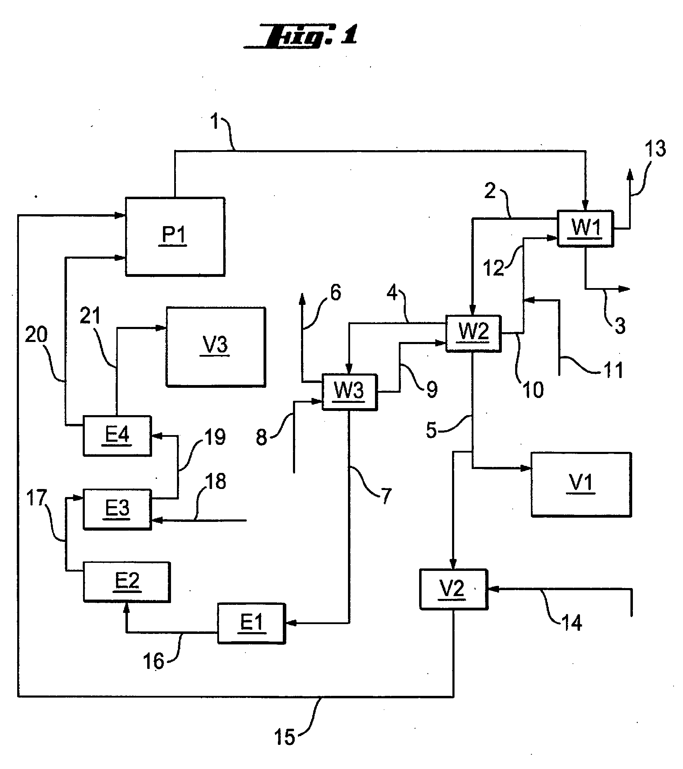

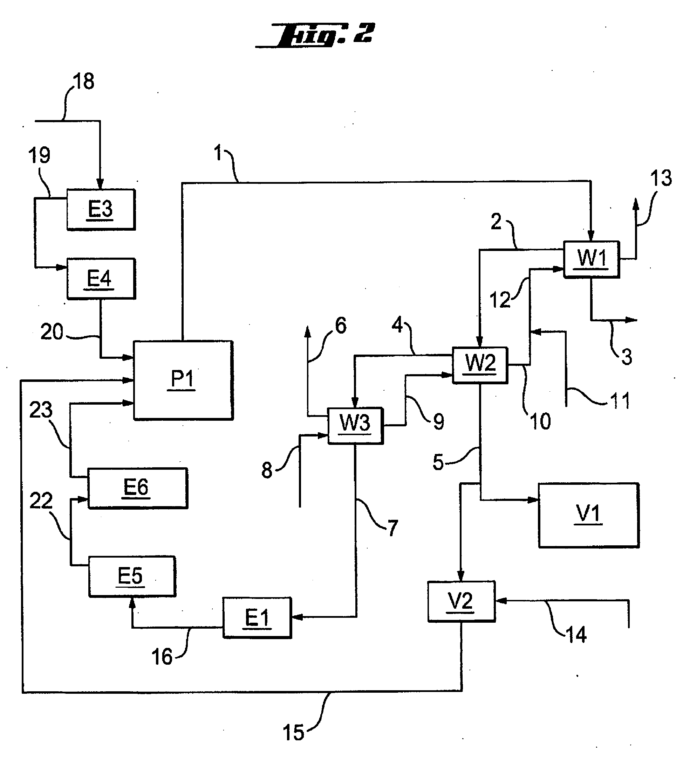

Nachfolgend wird das erfindungsgemäße Verfahren nochmals anhand von den beiden Fließschemen aus Figur 1 und 2 detaillierter beschrieben.

Das Fließschema für die gasförmige Ethylenrückführung des erfindungsgemäßen Verfahren ist in Figur 1 wiedergegeben. Das Fließschema für die Flüssig-Ethylenrückführung des erfindungsgemäßen Verfahrens ist in Figur 2 wiedergegeben.

Die folgende Beschreibung gilt sowohl für Figur 1 als auch für Figur 2. Die Polymerisation [P1] kann kontinuierlich als auch diskontinuierlich erfolgen. Nach der anschließenden Entspannung des Reaktionsgemisches wird das Restgas [1] der fraktionierten Tiefkaltkondensation zugeführt. Der resultierende Restgasstrom [1] wird in die erste Kondensationsstufe [W1] geführt, das hier gebildete Restgas [2] und Kondensat [3] verlassen die 1. Stufe [W1] bei einer Temperatur von mindestens 1°C. Das Restgas [2] wird in die zweite Kondensationsstufe [W2] geleitet. Wobei das hier gebildete Restgas [4] und Kondensat [5] die zweite Stufe [W2] bei einer Temperatur von -90 bis -60°C verlassen. Das Restgas [4] wird in die dritte Stufe [W3] geleitet und das hier gebildete Restgas [6] und Kondensat [7] verlassen die dritte Stufe [W3] bei einer Temperatur von -140 bis -100°C. Um die notwendigen Wärmemengen in den jeweiligen Kondensationsstufen abführen zu können, wird unter Verwendung von Flüssigstickstoff gekühlt. Für die Wärmeabfuhr wird die dritte Kondensationsstufe [W3] im Gegenstrom zum Restgas [4] mit Flüssigstickstoff [8] beaufschlagt. Der Stickstoff verdampft dabei vollständig und wird für die Wärmeabfuhr in der 2. Stufe [W2] als gasförmiger Stickstoff [9] im Gegenstrom zum Restgas [2] geschaltet. Nach der 2. Stufe [W2] hat sich der gasförmige Stickstoff weiter erwärmt [10]. Um in der ersten Stufe [W1] genügend Wärme abführen zu können, wird dem Stickstoffstrom [10] nochmals Flüssigstickstoff [11] zugemischt. Danach wird der so abgekühlte gasförmige Stickstoffstrom [12] im ersten Kondensator [W1] im Gegenstrom zum Restgas [1] geschaltet. Nach Verlassen von [W1] kann der erwärmte Stickstoffstrom [13] weiteren Verwendungen zugeführt werden. Das Kondensat [5] welches als Hauptbestandteil Vinylacetat enthält, kann entweder direkt einer Destillation in einer Vinylacetatmonomeranlage [V1] zugeführt werden oder es wird in einen Vinylacetat-Tank [V2] überführt. [V2] verfügt zudem über einen Zulaufstrom für frisches Vinylacetat [14]. Aus [V2] erfolgt dann die Einspeisung von Vinylacetat [15] in die Polymerisation [P1]. Das Kondensat [7] enthält als Hauptbestandteil Ethylen welches mittels einer Ethylenpumpe [E1] gefördert wird.

Der weitere Fluss des Kondensates [7] hängt davon ab, ob die anschließende Verwertung im flüssigen oder gasförmigen Zustand erfolgen soll.

Die gasförmige Ethylenrückführung ist in Figur 1 dargestellt. Die Ethylenpumpe [E1] pumpt das flüssige Ethylen [16] zu einem Ethylenverdampfer [E2]. Das daraus erhaltene gasförmige Ethylen [17] wird in einem Ethylengaspuffer [E3], der zusätzlich auch mit frischem Ethylen [18] gespeist werden kann, zwischengelagert. Von dort aus gelangt das gasförmige Ethylen [19] in einen Ethylenverdichter [E4] welcher das verdichtete Ethylen [20] der Polymerisation [P1] zuführt. Eine weitere Möglichkeit besteht darin verdichtetes Ethylen [21] dem Reaktionskreislauf einer Vinylacetat-Monomeranlage [V3] zuzuführen.

Die Flüssig-Ethylenrückführung ist in Figur 2 dargestellt. Die Ethylenpumpe [E1] pumpt das flüssige Ethylen [16] zu einem Flüssigethylenspeicher [E5]. Flüssiges Ethylen [22] kann dann mittels einer Ethylenhochdruckpumpe [E6] über eine zusätzliche Zuleitung [23] der Polymerisation [P1] zugeführt werden. Die Zufuhr von frischem Ethylen [18] erfolgt über einen Ethylengaspuffer [E3]. Von dort aus gelangt das gasförmige Ethylen [19] in einen Ethylenverdichter [E4] welcher das verdichtete Ethylen [20] der Polymerisation [P1] zuführt. Das erfindungsgemäße Verfahren ist so zu betreiben, dass bei der fraktionierten Tiefkaltkondensation entsprechend den Fließschemen in den Figuren 1 und 2 in der ersten Stufe [W1] der Hauptanteil des Wassers auskondensiert wird. Um Vereisung des Wärmetauschers zu vermeiden, darf die niedrigste Restgastemperatur [2] in dieser Stufe +1°C nicht unterschreiten. Der Kondensator wird so ausgelegt, dass mindestens 90% des Wassers in flüssiger Form als Kondensat [3] abgeführt werden.

In der zweiten Stufe [W2] liegt die niedrigste Temperatur zwischen -90 bis -60°C, in Abhängigkeit von der Ethylacetatkonzentration im Restgasstrom [2]. Der Kondensator wird so ausgelegt, dass über 99% des Vinylacetats und der übrigen in der Tabelle 1 genannten Kohlenwasserstoffe mit Ausnahme von Ethylen in flüssiger Form als Kondensat [5] abgeführt werden.

In Abhängigkeit von den Anforderungen an die stoffliche Wiederverwertung des Ethylens ergeben sich nach Abtrennung von Wasser, Vinylacetat und der in der Tabelle 1 genannten Kohlenwasserstoffe folgende Varianten für die Verwendung einer dritten Kondensationsstufe [W3] im erfindungsgemäßen Verfahren.

Bei der Ausführungsform der gasförmigen Ethylenrückführung wird in einer dritten Kondensationsstufe [W3], bei der, abhängig vom Druck, Temperaturen zwischen -140 bis -100°C erreicht werden, das Ethylen vom Stickstoff durch Auskondensation getrennt und durch Verdampfen bei Drücken von 1 bis 120 bar absolut in gasförmiger Form [17] bereitgestellt.

Bei der Ausführungsform der Flüssig-Ethylenrückführung wird in einer dritten Kondensationsstufe [W3], bei der, abhängig vom Druck, Temperaturen zwischen -140 bis -100°C erreicht werden, das Ethylen vom Stickstoff durch Auskondensation getrennt und in flüssiger Form (tiefkalt) [22] bereitgestellt.

Bevorzugt liegen die Temperaturen in einer dritten Kondensationsstufe [W3] zwischen -140 bis -120°C.

Bei einer weiteren Ausführungsform der gasförmigen Ethylenrückgewinnung wird auf eine dritte Kondensationsstufe [W3] verzichtet, wenn der Anteil des Stickstoffs in der Ethylenfraktion, also im Restgas [4] der zweiten Stufe [W2] für den weiteren Einsatz nicht relevant ist.

Es bestehen folgende stoffliche Verwertungsmöglichkeiten der einzelnen Fraktionen, aus dem erfindungsgemäßen Verfahren.

Das Kondensat [5] der zweiten Stufe [W2] besteht aus mindestens 95 Massen% Vinylacetat und enthält Spuren von Wasser, Acetaldehyd, Methanol, Methyl- und Ethylacetat. Dieses Stoffgemisch kann entweder in der Dispersionspolymerisation [P1] eingesetzt oder in die destillative Aufarbeitung einer Vinylacetat-Monomer-Anlage [V1] eingebunden werden.

Das Kondensat [7] der dritten Stufe [W3] enthält mindestens 98 Massen% Ethylen. Es kann entweder in der Dispersionspolymerisation [P1] eingesetzt oder in den Reaktionskreislauf beispielsweise einer Vinylacetat-Monomer-Anlage [V3] eingebunden werden.

Das Restgas [4] der zweiten Stufe [W2] enthält mindestens 95 Massen% Ethylen. Es kann ebenfalls entweder in der Dispersionspolymerisation [P1] eingesetzt oder in den Reaktionskreislauf beispielsweise einer Vinylacetat-Monomer-Anlage [V3] eingebunden werden. Wobei, bei dieser Ausführungsform der gasförmigen Ethylenrückgewinnung, die dritte Stufe [W3] entfallen würde.

Für die erfindungsgemäße fraktionierte Tiefkaltkondensation werden Wärmetauscher, bevorzugt Rohrbündelwärmetauscher, verwendet. Um Verstopfung der Wärmetauscher und Rohrleitungen zu verhindern, sind enge Spalten und tote Zonen in allen Bereichen, die durch das Restgas und durch die Kondensate durchströmt werden, konstruktiv zu vermeiden.

Um einen Dauerbetrieb der mehrstufigen Tieftemperaturkondensationsanlage sicherzustellen, werden die einzelnen Kondensationsstufen in einer bevorzugten Ausführungsform mit jeweils einer Ersatzkondensationsstufe ausgestattet, die über entsprechende Umschaltmöglichkeiten zwischen Kondensationsstufe und Ersatzkondensationsstufe verfügen. In einer besonders bevorzugten Ausführungsform erhält lediglich die zweite Stufe [W2] eine entsprechende Ersatzkondensationsstufe. Damit sind Wartungsarbeiten der Kondensationsstufen problemlos auch während des Dauerbetriebs möglich.

### Beispiele

Das nachstehende erfindungsgemäße Beispiel entspricht dem Teil der Figur 1, welche das Fließbild der dreistufigen Tieftemperaturkondensation vom Restgas einer Vinylester-Ethylen-Mischpolymerisation darstellt. Es umfasst dabei folgende Apparaturaufbauten [W1] bis [W3] und die Ströme [1] bis [12].

Der Restgasstrom [1] mit 60 Nm3/h (88 kg/h), enthaltend 75 mol% Ethylen, 11 mol% Vinylacetat, 10 mol% Wasser, 1,5 mol% Ethan, jeweils 0,1 mol% Acetaldehyd und Methanol (Rest N₂), wird in einer dreistufigen Tieftemperaturkondensation behandelt. Bei einem absoluten Druck von 600 mbar beträgt die Restgastemperatur 40°C.

Durch Einleiten des Restgasstroms [1] werden in der ersten Kondensationsstufe [W1] ca. 4 kW Wärme abgeführt, Restgas [2] und Kondensat [3] verlassen die 1. Stufe [W1] bei einer Temperatur von 5°C. Das Restgas [2] wird dabei zu 87% an Wasser, 42% an Methanol und 3,4% an Acetaldehyd abgereichert. Das Kondensat [3] besteht aus 97 Gew% Wasser, 1,7 Gew% Vinylacetat, 0,8 Gew% Methanol und 0,1 Gew% Acetaldehyd.

In der zweiten Kondensationsstufe [W2] werden ca. 5,8 kW Wärme abgeführt, Restgas [4] und Kondensat [5] verlassen die Stufe bei einer Temperatur von -70°C. Das Restgas [4] ist zu 99,8% an Vinylacetat, 99% an Acetaldehyd, 100% an Wasser und Methanol sowie 5,5% an Ethan abgereichert. Das Kondensat [5] der zweiten Stufe besteht aus 2,4 Gew% Wasser, 97 Gew% Vinylacetat, 0,2 Gew% Methanol und 0,4 Gew% Acetaldehyd.

Die dritte Stufe [W3] wird bei -140°C betrieben; durch Abzug von 9,7 kW Wärme entstehen ca. 55 kg/h Ethylen (>99,6% des Ethylens im Rohgas). Restgas [6] und Kondensat [7] verlassen die Stufe bei einer Temperatur von -140°C. Das Kondensat [7] besteht aus 98 Gew% Ethylen, 1,5 bis 2 Gew% Ethan und in Spuren Vinylacetat und Acetaldehyd. Das Restgas [6] enthält das Inertgas N₂.

Um die oben angegebenen Wärmemengen in den jeweiligen Kondensationsstufen abführen zu können, wird unter Verwendung von Flüssigstickstoff gekühlt.
Für die Wärmeabfuhr wird die dritte Kondensationsstufe [W3] im Gegenstrom zum Restgas [4] mit ca. 150 kg/h Flüssigstickstoff [8] bei 6,5 bar-absolut und -175°C beaufschlagt. Der Stickstoff verdampft dabei vollständig und verlässt mit -118°C [9] diese Stufe. Für die Wärmeabfuhr in der 2. Stufe [W2] wird der gasförmige Stickstoff [9] im Gegenstrom zum Restgas [2] geschaltet. Nach der 2. Stufe [W2] hat sich der gasförmige Stickstoff weiter auf +13°C [10] erwärmt. Um in der ersten Stufe [W1] 4 kW Wärme abführen zu können, werden diesem Stickstoffstrom [10] weitere ca. 30 kg/h Flüssigstickstoff [11] zugemischt. Damit erreicht der Stickstoffstrom [12] am Eintritt in den ersten Kondensator [W1] ca. -46°C und verlässt ihn mit 30°C [13].

## Patentansprüche

1. Verfahren zur Herstellung von Vinylester und Ethylen oder ethylenisch ungesättigten Monomeren enthaltenden Mischpolymerisaten durch wässrige, radikalische Polymerisation, bei einem Druck von 5 bis 100 bar absolut, nach dem Emulsions- oder Suspensionspolymerisationsverfahren, **dadurch gekennzeichnet, dass** nach Abschluss der Polymerisation das Reaktionsgemisch auf einen Druck von 0,1 bis 5 bar absolut entspannt wird, und die Rückgewinnung der nicht umgesetzten Monomeren durch mehrstufige fraktionierte Tiefkaltkondensation aus dem Restgas erfolgt, mit der Maßgabe, dass Wasserdampf in der ersten Kondensationsstufe bei Temperaturen von 1 bis 5°C auskondensiert wird und dass in der zweiten Kondensationsstufe Vinylacetat bei Temperaturen von -90 bis -60°C auskondensiert wird und dass in der dritten Kondensationsstufe Ethylen bei Temperaturen von -140 bis - 100°C auskondensiert wird.

2. Verfahren gemäß Anspruch 1, **dadurch gekennzeichnet, dass** das in flüssiger Form erhaltene Ethylen unter einem Druck von 1 bis 20 bar-absolut verdampft und anschließend wieder in die Polymerisationsreaktion verdichtet oder in einer Vinylacetatmonomer-Produktionsanlage als Rohstoff in den Reaktionskreislauf eingespeist wird.

3. Verfahren gemäß Anspruch 1, **dadurch gekennzeichnet, dass** das in flüssiger Form erhaltene Ethylen wieder in die Polymerisation eingespeist wird.

4. Verfahren gemäß Anspruch 1, 2 oder 3, **dadurch gekennzeichnet, dass** das in flüssiger Form erhaltene Vinylacetat wieder in die Polymerisation zurückgeführt oder in einer Vinylacetatmonomer-Produktionsanlage in das Destillationssystem eingespeist wird.

5. Verfahren gemäß einem der Ansprüche 1 bis 4, **dadurch gekennzeichnet, dass** die mehrstufige Kondensation auf der Saugseite der Vakuumpumpe angeordnet wird.

6. Verfahren gemäß einem der Ansprüche 1 bis 5, **dadurch gekennzeichnet, dass** die mehrstufige Kondensation auf der Druckseite eines Verdichters angeordnet wird.

7. Verfahren gemäß einem der Ansprüche 1 bis 6, **dadurch gekenntzeichnet, dass** das Polymerisationsverfahren vollkontinuierlich oder diskontinuierlich betrieben wird.

8. Verfahren gemäß einem der Ansprüche 1 bis 7, **dadurch gekennzeichnet, dass** die Polymerisation bei einem Umsatz von 95 bis 99 Cew.-% der unter Polymerisationsbedingungen flüssigen Monomere, abgeschlossen wird.

9. Verfahren gemäß einem der Ansprüche 1 bis 8, **dadurch gekennzeichnet, dass** zur Polymerisation Gemische eingesetzt werden aus Vinylacetat und Ethylen, sowie Gemische aus Vinylacetat und weiteren Vinylestern wie Vinyllaurat oder Vinylestern von α-verzweigten Monocarbonsäuren mit 9 bis 13 C-Atomen und Ethylen.

## Claims

1. Process for the preparation of copolymers containing vinyl esters and ethylene or ethylenically unsaturated monomers by aqueous, free radical polymerization at a pressure of from 5 to 100 bar absolute by the emulsion or suspension polymerization method, **characterized in that**, after the end of the polymerization, the reaction mixture is let down to a pressure of from 0.1 to 5 bar absolute and the recovery of the unconverted monomers is effected by multistage fractional low-temperature condensation from the residual gas with the proviso that water vapor is condensed out in the first condensation stage at temperatures of from 1 to 5°C and that vinyl acetate is condensed out at temperatures of from -90 to -60°C in the second condensation stage and that ethylene is condensed out at temperatures of from -140 to -100°C in the third condensation stage.

2. Process according to Claim 1, **characterized in that** the ethylene obtained in liquid form is vaporized under a pressure of from 1 to 20 bar absolute and then compressed again into the polymerization reaction or fed as raw material into the reaction circulation in a vinyl acetate monomer production plant.

3. Process according to Claim 1, **characterized in that** the ethylene obtained in liquid form is fed back into the polymerization.

4. Process according to Claim 1, 2 or 3, **characterized in that** the vinyl acetate obtained in liquid form is recycled to the polymerization or fed into the distillation system in a vinyl acetate monomer production plant.

5. Process according to any of Claims 1 to 4, **characterized in that** the multistage condensation is arranged on the suction side of the vacuum pump.

6. Process according to any of Claims 1 to 5, **characterized in that** the multistage condensation is arranged on the pressure side of a compressor.

7. Process according to any of Claims 1 to 6, **characterized in that** the polymerization process is operated completely continuously or batchwise.

8. Process according to any of Claims 1 to 7, **characterized in that** the polymerization is complete at a conversion of from 95 to 99% by weight of the monomers which are liquid under polymerization conditions.

9. Process according to any of Claims 1 to 8, **characterized in that** mixtures of vinyl acetate and ethylene, and mixtures of vinyl acetate and further vinyl esters, such as vinyl laurate or vinyl esters of α-branched monocarboxylic acids having 9 to 13 C atoms, and ethylene, are used for the polymerization.

## Revendications

1. Procédé de fabrication de copolymères contenant un ester de vinyle et de l'éthylène ou des monomères éthyléniquement insaturés par polymérisation radicalaire aqueuse, à une pression de 5 à 100 bars absolus, selon le procédé de polymérisation en émulsion ou en suspension, **caractérisé en ce qu'**après la fin de la polymérisation, le mélange réactionnel est détendu à une pression de 0,1 à 5 bars absolus et les monomères non réagis sont récupérés à partir du gaz résiduel par condensation fractionnée en plusieurs étapes sous refroidissement profond, à condition que la vapeur d'eau soit condensée lors de la première étape de condensation à des températures de 1 à 5 °C et que l'acétate de vinyle soit condensé lors de la deuxième étape de condensation à des températures de -90 à - 60 °C et que l'éthylène soit condensé lors de la troisième étape de condensation à des températures de - 140 à 100 °C.

2. Procédé selon la revendication 1, **caractérisé en ce que** l'éthylène obtenu sous forme liquide est évaporé sous une pression de 1 à 20 bars absolus, puis à nouveau comprimé dans la réaction de polymérisation ou introduit dans la boucle réactionnelle dans une installation de production du monomère acétate de vinyle en tant que matière première.

3. Procédé selon la revendication 1, **caractérisé en ce que** l'éthylène obtenu sous forme liquide est à nouveau introduit dans la polymérisation.

4. Procédé selon la revendication 1, 2 ou 3, **caractérisé en ce que** l'acétate de vinyle obtenu sous forme liquide est recyclé dans la polymérisation ou introduit dans le système de distillation dans une installation de production du monomère acétate de vinyle.

5. Procédé selon l'une quelconque des revendications 1 à 4, **caractérisé en ce que** la condensation en plusieurs étapes est placée du côté de l'aspiration de la pompe à vide.

6. Procédé selon l'une quelconque des revendications 1 à 5, **caractérisé en ce que** la condensation en plusieurs étapes est placée du côté du refoulement d'un compresseur.

7. Procédé selon l'une quelconque des revendications 1 à 6, **caractérisé en ce que** le procédé de polymérisation est réalisé de manière complètement continue ou de manière discontinue.

8. Procédé selon l'une quelconque des revendications 1 à 7, **caractérisé en ce que** la polymérisation est arrêtée à une conversion de 95 à 99 % en poids des monomères liquides dans les conditions de polymérisation.

9. Procédé selon l'une quelconque des revendications 1 à 8, **caractérisé en ce que** des mélanges d'acétate de vinyle et d'éthylène sont utilisés pour la polymérisation, ainsi que des mélanges d'acétate de vinyle et d'esters de vinyle supplémentaires, tels que le laurate de vinyle ou des esters de vinyle d'acides monocarboxyliques α-ramifiés contenant 9 à 13 atomes C, et d'éthylène.
